# EUROPEAN PATENT SPECIFICATION

(11) **EP 3 312 039 B1**
(45) Date of publication and mention of the grant of the patent: **30.11.2022**
(21) Application number: 17194786.4
(22) Date of filing: 04.10.2017
(51) Int. Cl.: B60K 35/00, B60K 37/06, B60Q 1/26, G08G 1/095, G08G 1/0965, G07C 5/00, H04M 1/02, H04W 4/00, H04W 88/00, H04W 4/80

(54) **APPARATUS FOR MANAGING AID VEHICLES**
VORRICHTUNG ZUR VERWALTUNG VON RETTUNGSFAHRZEUGEN
DISPOSITIF DE GESTION DES AMBULANCES

(30) Priority: 06.10.2016 IT 201600100397
(43) Date of publication of application: 25.04.2018
(73) Proprietor: Olmedo Special Vehicles S.p.A., 42021 Reggio Emilia Bibbiano (IT)
(72) Inventor: TARABELLONI, Giovanni, 42025 CAVRIAGO REGGIO EMILIA (IT)
(74) Representative: Gagliardelli, Fabrizio

(56) References cited:
- ES-U- 1 076 337
- US-A1- 2012 223 196
- US-A1- 2012 313 792

## Description

The present invention relates to an improved apparatus for managing ambulances.

In particular, the invention relates to an apparatus for managing the functions of the vehicle and, advantageously, for diagnosing the functions of the vehicle itself. Such vehicle according to the the prior art is known from ES 1 076 337 U.

It is known that ambulances are equipped with an electronic system provided for managing functions, such as sirens, flashing lights, the lighting of the sanitary compartment, etc.

Currently, these systems are equipped with interface devices mounted on board the vehicle, for example between the driver's compartment and in the sanitary compartment, physically connected to the control units of the functions with which the vehicle is provided.

A drawback of known systems is comprised of the fact that the cabling of these interface devices is complex and expensive.

Furthermore, in case of failure, the repair and replacement of damaged parts is very expensive, since it requires the disassembly of various parts of the vehicle, access to internal compartments through which the cables pass and intervention on these and on the devices physically connected to them. Furthermore, the known systems are inflexible and have limited functions. The technical task underpinning the present invention is therefore to provide an improved apparatus for managing an aid vehicle, able to obviate the drawbacks of the prior art.

Such task is obtained by the management apparatus realised in accordance with claim 1.

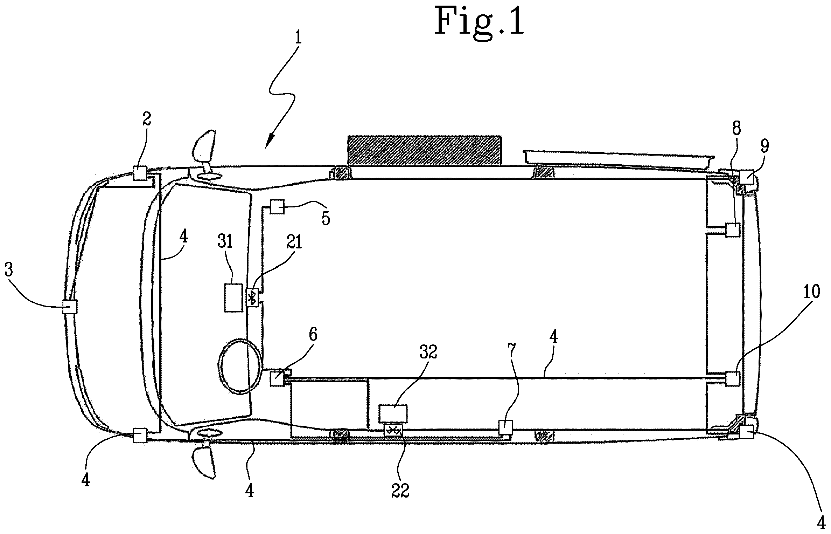

Further characteristics and advantages of the present invention will become more apparent from the approximate and thus non-limiting description of a preferred, but not exclusive, embodiment of a management apparatus according to the invention, as illustrated in the appended figure that represents a schematic plan view of an ambulance on which the proposed apparatus is installed.

The management apparatus according to the invention was devised to be used on an ambulance 1.

The apparatus proposed is an electronic apparatus, articulated into various components, designed for managing the functions of the vehicle 1, preferably able to perform a diagnosis on the functions of the vehicle 1 itself. In the present description, the term "function" means some devices or members that are part of the equipment of the vehicle 1 for its purposes of use, with particular but not exclusive reference to aid and emergency response activities.

For example, the flashing lights, lights, sirens, air-conditioning plants, facilitated access members (such as portable ramps, lifts, etc...) are considered to be the functions of the vehicle 1.

By way of non-limiting example, the functions of an ambulance may include: interior lighting devices for the sanitary compartment and wall units, exterior perimeter lighting devices, rear lighting devices, in particular for the stretcher loading area, the main and extra sirens, the reversing beeper, the different flashing lights (front and rear, main and extra), the automatic air-conditioning plant for the sanitary compartment, the engine liquids preheating plant, the electric access door to the driver's compartment from the sanitary compartment, the electric side access step, the hydraulic lifter for loading wheelchairs, the electric/hydraulic lifter for stretchers, etc...

The ambulance functions are driven by control units 2, 3, 4, 5, 6, 7, 8, 9, 10, 11 in installed therein, with which the apparatus according to the invention is adapted to communicate.

The apparatus proposed comprises at least one transceiver 21, 22 adapted to be physically connected to the vehicle control units 1 and one or more mobile devices 31, 32 predisposed for remote communication with the transceiver.

The mobile devices 31, 32 according to the invention are electronic devices such as smartphones, tablets, mobile phones, smartwatches, etc.

In the preferred embodiment of the invention, the mobile devices 31, 32 and transceivers 21, 22 are adapted to transmit digital data wirelessly via the Bluetooth standard; however, the use of other communication standards at radio frequencies or different wireless transmission means, such as the use of infrared or the like, is not excluded.

Each device 31, 32 is equipped with a processing unit configured to manage the functions, which comprises a user interface configured to enable an operator to command said functions.

In particular, the interface is configured to enable the operator to select the activation / deactivation of the individual function, for example through a specific menu.

The interface can be configured to receive voice commands, through recognition software; alternatively or additionally, the selection of the operator can be performed manually, for example through a touchscreen, or keypads or the like.

In practice, using the interface of the tablet 31, 32, or other mobile device 31, 32, the operator can command the control units 2, 3, 4, 5, 6, 7, 8, 9, 10, 11 of the ambulance to activate the functions in the desired way, for example they switch on the flashing lights and sirens or increase the temperature in the sanitary compartment, and so on.

In the present description, the processing unit is presented as divided into distinct functional modules for the sole purpose of describing the functions thereof in a clear and complete manner.

Practically, the processing unit can consist in a single electronic device, duly programmed to perform the functions described, and the various modules can correspond to hardware and/or routine software entities belonging to the programmed device.

In general, the processing unit can rely on one or more microprocessors to execute the instructions contained in the memory modules.

The said processing unit comprises at least one control module configured to transmit appropriate function command signals to the control units.

In detail, the command signals are a function of command parameters that are produced by the interface, in accordance with selections made by an operator.

Therefore, on a menu offered by the user interface or through a voice command, if the operator selects the deactivation action of a siren or the increase in temperature in the driver's compartment by one degree centigrade, this action is translated into a specific parameter that determines the related specific signal that is sent by the tablet (or other mobile device) to the transceiver 21, 22.

The transceiver 21, 22 is connected to the control unit which commands that siren or the air-conditioning of the driver's compartment, which control unit deactivates the siren or changes the operation of the air-conditioning based on the instructions received.

The ambulance 1, or other aid vehicle, comprises an internal control network of the functions which includes the different control units and a communication channel 4, formed for example by one or more cables, adapted to transmit data according to the CAN-bus standard.

The transceivers 21, 22 according to the invention are physically connected to the CAN-bus communication channel 4 and, through this, to the control units.

In the example shown, the apparatus comprises a transceiver 21, arranged in the driver's compartment and another transceiver 22 arranged in the sanitary compartment, connected through the communication channel 4 to the different control units.

In detail, the figure shows by way of non-limiting example: the power control unit 3 which manages the functions of the engine compartment, the right and left power control units 2, 4 of the driver's compartment, the power control unit of the sanitary compartment 7, the power control units 9, 10 of the right and left rear angles and the power control units 5, 6, 8, 9 that manage the various functions located in the front right side, front left side, rear right side and rear left side spoilers.

The vehicle 1 is equipped with a removable means for fixing the devices 31, 32, which is placed at the transceivers 21, 22. Before describing further aspects of the invention, it is to be noted how the proposed apparatus is able to completely overcome the limits of the prior art.

In fact, thanks to the use of the mobile devices 31, 32 and wireless communication, the invention completely overcomes all the drawbacks due to the use of the physical cabling that affect known systems.

It is to be noted that the transceivers 21, 22 are also preferably able to receive signals from outside the ambulance 1.

In practice, with an enabled mobile device 31, 32, which comprises the command module as described above, it is also possible to manage the ambulance functions from outside.

This is particularly useful in the case of a failure on one of the internal devices 31, 32.

If the ambulance 1 is equipped with a plurality of devices 31, 32 and one gets damaged, the remaining devices can compensate for the functions of the one to be replaced, i.e. they are totally reversible.

It is to be noted that the mobile devices 31, 32 according to the invention can also perform additional functions, using internet access like, for example, video conferences, the use of navigation maps, etc.

Furthermore, the apparatus according to the invention can be provided for data connection with the on-board computer of the vehicle 1 or with the advanced aid radio that is currently assembled on this type of vehicle, and so on.

Furthermore, the mobile devices 31, 32 can be used to film images or films of the places in which the vehicle 1 is located, so as to record them in the memory or transmit them remotely via internet, for example to an A & E department.

Furthermore, the vehicle 1 can be equipped with external cameras to improve the manoeuvring visibility, which are connected to the mobile devices 31, 32 according to the invention.

The invention can also be configured like an articulated management system that also includes a remote control unit and telecommunication means for data transmission/reception to/from the remote control unit and the apparatus on board the vehicle 1.

In this case, the telecommunication means is adapted to send to the vehicle control units 1 the aforementioned command signals in accordance with command parameters received from the control unit.

In practice, by exploiting the mobile internet connection, the individual ambulances 1 which are provided with the proposed apparatus are completely manageable by a remote control unit and are able to exchange data with it.

In particular, through the internet connection, it is also possible to download software updates for the mobile devices 31, 32.

Furthermore, through the use of the mentioned telecommunication means, it is possible to communicate with the A & E department or other destinations of the vehicle 1, so as to inform them in advance on the conditions of the rescued or transported people.

Furthermore, as partly already mentioned, the possibility of communication with remote centres can also be exploited for the diagnosis of the vehicle 1 itself.

To be precise, the remote control unit according to the invention preferably comprises its own processing control unit equipped with a diagnosis module configured to check the presence of malfunctioning on board the vehicle 1. In particular, the diagnosis module is adapted to determine the presence of malfunctioning in the aforementioned control network of the functions.

In even more detail, by way of non-exhaustive example, the remotely detectable malfunctioning may include: communication errors between the various control units, with the identification of the faulty or damaged component, status errors of the analog and digital inputs, overcurrents at each output of every control unit, excess temperatures on the power control units, incorrect voltage values that drive the functions.

The processing control unit may also include a correction module configured to intervene on the vehicle 1, in the event of malfunctioning, in order to prevent serious consequences to the equipment.

For example, in the event of excess temperatures in the power control units, the devices subject to them may be switched off by a command from the remote control unit.

Another example is that if an insufficient voltage is detected for the correct operation of all the equipment, the non-priority functions may be switched off.

The system proposed may envisage the use of portable recognition devices, adapted to transmit a recognition signal to means for receiving the signals envisaged in the management apparatus according to the invention, for example the transceivers 21, 22 mentioned above or other means again. In this case, the invention will include an enabling module configured to enable/inhibit the use of the management apparatus in accordance with the signal sent by the portable device and received by the receiving means.

In practice, the rescuers can be equipped with bracelets or other portable devices that, through the sending of a signal (in bluetooth or RFID or other technology), allow the enabling of the functions of the apparatus according to the invention.

In this way, non-authorised personnel cannot use the functions of the vehicle 1 or the devices according to the invention in an improper way.

Optionally, this possibility can be used to enable or inhibit the starting of the vehicle 1 (preventing theft) or the degree of access to the system can be modulated, based on different levels of credentials with which the operators can be associated, based on their role or specific appointment.

Finally, the system according to the invention can be configured for dialogue with external electronic devices placed in the surrounding environment.

For example, by using long-range bluetooth technology or other technology suitable for the purpose, the proposed apparatus could transmit instructions to command devices of traffic lights, so as to switch their status in proximity to the passing of the ambulance on which the apparatus is mounted. Furthermore, upon the passage of the ambulance, retractable bollards could be controlled, so as to free the passage for the entry of the vehicle 1 in reserved areas and so on.

## Claims

1. An ambulance vehicle (1), including a plurality of functions and one or more control units (2, 3, 4, 5, 6, 7, 8, 9, 10, 11) of the vehicle (1) predisposed for commanding functions with which the vehicle (1) is equipped, such as flashing lights, lights, sirens, air-conditioning plants, facilitated access members , comprising a management apparatus, connected to said control units, which in turn comprises at least a transceiver (21, 22) adapted to be connected to said control units and at least a mobile device (31, 32) predisposed for a remote communication with said transceiver (21, 22), said mobile device (31, 32) being provided with a processing unit configured for managing said functions, said processing unit comprising a user interface configured for enabling an operator to command said functions; the vehicle being **characterized in that** it is provided with removable fixing means of the mobile device (31, 32) placed at the transceivers (21, 22).

2. The vehicle according to the preceding claim, wherein said mobile device (31, 32) and said transceiver are adapted to transmit digital data wirelessly via the Bluetooth standard.

3. The vehicle according to at least one of the preceding claims, wherein said processing unit comprises at least a command module configured for transmitting to said control units (2, 3, 4, 5, 6, 7, 8, 9, 10, 11) function command signals, as a function of command parameters produced by said interface, according to selections made by an operator.

4. The vehicle according to claim 1, comprising at least an internal control network of the functions which comprises said control units (2, 3, 4, 5, 6, 7, 8, 9, 10, 11) and at least one communication channel (4), adapted to transmit data according to the CAN-bus standard and connected to said control units, wherein said transceivers (21, 22) are connected to said communication channel (4).

5. A management system including an ambulance vehicle (1), according to claims 1 to 3, comprising a remote central control unit and telecommunications means for data transmission/reception to/from said remote central control unit, said telecommunications means being adapted to send to the vehicle control units (1) command signals according to command parameters received from the remote central command unit.

6. The management system according to the preceding claim, wherein the remote central control unit comprises a central processing unit provided with a diagnostic module configured for verifying a presence of malfunctioning in a function control network installed in the vehicles, which comprises one or more control units (2, 3, 4, 5, 6, 7, 8, 9, 10, 11) of the vehicle (1) and a communication channel (4) connected to the control units.

7. The system according to the preceding claim, comprising at least one portable acknowledgement device, adapted to transmit an acknowledgement signal to signal receiving means connected to an enabling module configured for enabling/inhibiting use of the management apparatus according to the signal received from said receiving means.

## Patentansprüche

1. Krankenwagenfahrzeug (1), einschließend eine Vielzahl von Funktionen und eine oder mehrere Steuereinheiten (2, 3, 4, 5, 6, 7, 8, 9, 10, 11) des Fahrzeugs (1), die zum Befehlen von Funktionen, mit denen das Fahrzeug (1) ausgestattet ist, eingerichtet sind, wie Blinklichter, Lichter, Sirenen, Klimaanlagen, erleichterte Zugangselemente, umfassend eine Verwaltungsvorrichtung, die mit den Steuereinheiten verbunden ist, das wiederum mindestens einen Sendeempfänger (21, 22) umfasst, der angepasst ist, um mit den Steuereinheiten verbunden zu werden, und mindestens ein Mobilgerät (31, 32), das für eine Fernkommunikation mit dem Sendeempfänger (21, 22) eingerichtet ist, wobei das Mobilgerät (31, 32) mit einer Verarbeitungseinheit versehen ist, die zum Verwalten der Funktionen konfiguriert ist, wobei die Verarbeitungseinheit eine Benutzerschnittstelle umfasst, die konfiguriert ist, um es einem Bediener zu ermöglichen, die Funktionen zu befehlen; wobei das Fahrzeug **dadurch gekennzeichnet ist, dass** es mit entfernbaren Befestigungsmitteln des Mobilgeräts (31, 32) versehen ist, die an den Sendeempfängern (21, 22) platziert sind.

2. Fahrzeug nach dem vorhergehenden Anspruch, wobei das Mobilgerät (31, 32) und der Sendeempfänger angepasst sind, um digitale Daten drahtlos über den Bluetooth-Standard zu übertragen.

3. Fahrzeug nach zumindest einem der vorhergehenden Ansprüche, wobei die Verarbeitungseinheit zumindest ein Befehlsmodul umfasst, das konfiguriert ist, um an die Steuereinheiten (2, 3, 4, 5, 6, 7, 8, 9, 10, 11) Funktionsbefehlssignale als Funktion von Befehlsparametern, die von der Schnittstelle erzeugt werden, gemäß Auswahlen, die von einem Bediener vorgenommen werden, zu übertragen.

4. Fahrzeug nach Anspruch 1, umfassend mindestens ein internes Steuernetzwerk der Funktionen, das die Steuereinheiten (2, 3, 4, 5, 6, 7, 8, 9, 10, 11) umfasst und mindestens einen Kommunikationskanal (4), der angepasst ist, um Daten gemäß dem CAN-Bus-Standard zu übertragen und mit den Steuereinheiten verbunden ist, wobei die Sendeempfänger (21, 22) mit dem Kommunikationskanal (4) verbunden sind.

5. Verwaltungssystem, einschließend einen Krankenwagen (1) nach den Ansprüchen 1 bis 3, umfassend eine Fernzentralsteuereinheit und Telekommunikationsmittel zum Übertragen/Empfangen von Daten zu/von der Fernzentralsteuereinheit, wobei die Telekommunikationsmittel angepasst sind, um an die Fahrzeugsteuereinheiten (1) Befehlssignale gemäß Befehlsparametern zu senden, die von der Fernzentralsteuereinheit empfangen wurden.

6. Verwaltungssystem nach dem vorhergehenden Anspruch, wobei die Fernzentralsteuereinheit eine zentrale Verarbeitungseinheit umfasst, die mit einem Diagnosemodul versehen ist, das zum Verifizieren eines Vorhandenseins einer Fehlfunktion in einem im Fahrzeug installierten Funktionssteuerungsnetzwerk konfiguriert ist, das eine oder mehrere Steuereinheiten (2, 3, 4, 5, 6, 7, 8, 9, 10, 11) des Fahrzeugs (1) und einen mit den Steuereinheiten verbundenen Kommunikationskanal (4) umfasst.

7. System nach dem vorhergehenden Anspruch, umfassend mindestens eine tragbare Quittiervorrichtung, die angepasst ist, um ein Quittiersignal an Signalempfangsmittel zu übertragen, die mit einem Freigabemodul verbunden sind, das konfiguriert ist, um die Verwendung des Verwaltungsgeräts gemäß dem von den Empfangsmitteln empfangenen Signal freizugeben/zu sperren.

## Revendications

1. Ambulance (1), incluant une pluralité de fonctions et une ou plusieurs unités de commande (2, 3, 4, 5, 6, 7, 8, 9, 10, 11) du véhicule (1) prédisposées pour commander des fonctions dont le véhicule (1) est équipé, telles que des feux clignotants, des lumières, des sirènes, des installations de climatisation, des éléments d'accès facilité, comprenant un appareil de gestion, connecté auxdites unités de commande, qui comprend à son tour au moins un émetteur-récepteur (21, 22) adapté pour être connecté auxdites unités de commande et au moins un dispositif mobile (31, 32) prédisposé pour une communication à distance avec ledit émetteur-récepteur (21, 22), ledit dispositif mobile (31, 32) étant pourvu d'une unité de traitement configurée pour gérer lesdites fonctions, ladite unité de traitement comprenant une interface utilisateur configurée pour permettre à un opérateur de commander lesdites fonctions ; le véhicule étant **caractérisé en ce qu'**il est pourvu de moyens de fixation amovibles du dispositif mobile (31, 32) placés en correspondance des émetteurs-récepteurs (21, 22).

2. Véhicule selon la revendication précédente, dans lequel ledit dispositif mobile (31, 32) et ledit émetteur-récepteur sont adaptés pour transmettre des données numériques sans fil via la norme Bluetooth.

3. Véhicule selon au moins une des revendications précédentes, dans lequel ladite unité de traitement comprend au moins un module de commande configuré pour transmettre auxdites unités de commande (2, 3, 4, 5, 6, 7, 8, 9, 10, 11) des signaux de commande de fonction, en fonction de paramètres de commande produits par ladite interface, selon des sélections effectuées par un opérateur.

4. Véhicule selon la revendication 1, comprenant au moins un réseau de contrôle interne des fonctions qui comprend lesdites unités de commande (2, 3, 4, 5, 6, 7, 8, 9, 10, 11) et au moins un canal de communication (4) adapté pour transmettre des données selon la norme CAN-bus et connecté auxdites unités de commande, dans lequel lesdits émetteurs-récepteurs (21, 22) sont connectés audit canal de communication (4).

5. Système de gestion, incluant une ambulance (1) selon les revendications 1 à 3, comprenant une unité de commande centrale à distance et des moyens de télécommunications pour la transmission/réception de données vers/de ladite unité de commande centrale à distance, lesdits moyens de télécommunications étant adaptés pour envoyer aux unités de commande du véhicule (1) des signaux de commande selon des paramètres de commande reçus de l'unité de commande centrale à distance.

6. Système de gestion selon la revendication précédente, dans lequel l'unité centrale de commande à distance comprend une unité centrale de traitement pourvue d'un module de diagnostic configuré pour vérifier la présence d'un dysfonctionnement dans un réseau de contrôle de fonctions installé dans les véhicules, qui comprend une ou plusieurs unités de commande (2, 3, 4, 5, 6, 7, 8, 9, 10, 11) du véhicule (1) et un canal de communication (4) connecté aux unités de commande.

7. Système selon la revendication précédente, comprenant au moins un dispositif de reconnaissance portable, adapté pour transmettre un signal de reconnaissance à des moyens de réception de signaux connectés à un module d'activation configuré pour activer/inhiber l'utilisation de l'appareil de gestion selon le signal reçu desdits moyens de réception.
